# EUROPEAN PATENT APPLICATION

(11) **EP 4 135 393 A1**
(43) Date of publication of application: **15.02.2023**
(21) Application number: 21785270.6
(22) Date of filing: 24.03.2021
(51) Int. Cl.: H04W 24/10, H04W 76/10, H04W 76/19

(54) **WIRELESS LINK FAILURE INFORMATION REPORTING AND OBTAINING METHOD, TERMINAL, AND NETWORK SIDE DEVICE**

(30) Priority: 08.04.2020 CN 202010282825
(71) Applicant: Datang Mobile Communications Equipment Co., Ltd., Beijing 100085 (CN)
(72) Inventor: WANG, Ruiwei, Beijing 100083 (CN); LIU, Aijuan, Beijing 100083 (CN); YAN, Nan, Beijing 100083 (CN)
(74) Representative: dompatent von Kreisler Selting Werner - Partnerschaft von Patent- und Rechtsanwälten mbB
(86) International application number: PCT/CN2021/082681
(87) International publication number: WO 2021/203973

(57) **Abstract**

The present disclosure provides a method of reporting radio link failure information, a method of obtaining radio link failure information, a terminal, and a network side device. The method of reporting radio link failure information, applied to a terminal, includes: recording radio link failure (RLF) information, in a process of the terminal performing a radio resource control (RRC) connection re-establishment or a RRC connection establishment, the RLF information including at least one of: a tracking area code (TAC), a tracking area identifier (TAI) and a system identifier of a terminal access cell, wherein the RLF information is related to a time of RRC connection establishment or RRC connection re-establishment; reporting the RLF information to a network side device.

## Description

### CROSS-REFERENCE TO RELATED APPLICATION

The present application claims a priority to the Chinese patent application No. 202010282825.2 filed in China on April 8, 2020, a disclosure of which is incorporated herein by reference in its entirety.

### TECHNICAL FIELD

The present disclosure relates to the field of communication technology, in particular to a method of reporting radio link failure information, a method of obtaining radio link failure information, a terminal, and a network side device.

### BACKGROUND

New Radio (NR) R16 also introduces the Mobility Robustness Optimisation (MRO) feature, which mainly addresses the problem of parameter optimization in the mobility process. In the case of handover failure, the terminal only records the cell global identity (CGI) information of the access cell, but lacks some necessary information, which may lead to misjudgement of the MRO.

### SUMMARY

An embodiment of the present disclosure provides a method of reporting radio link failure information, a method of obtaining radio link failure information, a terminal, and a network side device, which solve the problem that the terminal only records the CGI of the access cell in the scenario of handover failure in the related technology, which may lead to MRO misjudgement.

In order to solve the above technical problem, an embodiment of the present disclosure provides a method of reporting radio link failure information, applied to a terminal, including:
recording radio link failure (RLF) information, in a process of the terminal performing a radio resource control (RRC) connection re-establishment or a RRC connection establishment, the RLF information including at least one of the following: a tracking area code (TAC), a tracking area identifier (TAI) and a system identifier of a terminal access cell, wherein the RLF information is related to a time of RRC connection establishment or RRC connection re-establishment;
reporting the RLF information to a network side device.

Optionally, the recording the radio link failure (RLF) information, in the process of the terminal performing the radio resource control (RRC) connection re-establishment or the RRC connection establishment, includes:
recording the RLF information when the terminal sends an RRC connection re-establishment request or an RRC connection establishment request.

Further, the RLF information further includes: access time information, the access time information being used to indicate a length of time from a handover failure or a radio link failure to a RRC connection establishment or RRC connection re-establishment made by the terminal.

Further, before the recording the RLF information when the terminal sends the RRC connection re-establishment request or the RRC connection establishment request, further includes:
starting a first timer when a handover failure or a radio link failure occurs at the terminal;
the recording the RLF information when the terminal sends the RRC connection re-establishment request or the RRC connection establishment request, including:
   recording the RLF information if the first timer is in operation, when the terminal sends the RRC connection re-establishment request or the RRC connection establishment request.

Optionally, before the starting the first timer when the handover failure or the radio link failure occurs at the terminal, further includes:
obtaining configuration information of the first timer sent by the network side device via air interface signalling.

Specifically, the recording the RLF information in case the terminal sends the RRC connection establishment request, includes:
recording the RLF information when the RRC connection establishment request is triggered for a first time after a handover failure or a radio link failure occurs at the terminal.

Specifically, the system identifier is used to indicate one of the following:
an access cell is an evolved packet core (EPC) system;
the access cell is a fifth-generation core (5GC) system;
the access cell is a universal terrestrial radio access (UTRA) system;
the access cell is a wireless fidelity (WIFI) system.

Specifically, the reporting the RLF information to the network side device, includes:
sending the RLF information to the network side device via air interface signalling.

Optionally, the RLF information further includes: a cell global identity (CGI) of RRC connection establishment or RRC connection re-establishment cell.

An embodiment of the present disclosure further provides a method of obtaining radio link failure information, applied to a network side device, including:
receiving radio link failure (RLF) information sent by a terminal;
wherein the RLF information includes at least one of the following: a tracking area code (TAC), a tracking area identifier (TAI) and a system identifier of a terminal access cell, wherein the RLF information is related to a time of RRC connection establishment or RRC connection re-establishment.

Optionally, the RLF information further includes: access time information, the access time information being used to indicate a length of time from a handover failure or a radio link failure to a RRC connection establishment or RRC connection re-establishment made by the terminal.

Optionally, before the receiving the radio link failure (RLF) information sent by the terminal, further includes:
sending configuration information of a first timer to the terminal via air interface signalling.

Specifically, the system identifier is used to indicate one of the following:
an access cell is an evolved packet core (EPC) system;
the access cell is a fifth-generation core (5GC) system;
the access cell is a universal terrestrial radio access (UTRA) system;
the access cell is a wireless fidelity (WIFI) system.

Specifically, the receiving the radio link failure (RLF) information sent by the terminal, includes:
receiving the RLF information sent by the terminal via air interface signalling;
wherein, the RLF information is passed between network side devices or within the network side device.

Further, an interface used to pass the RLF information includes at least one of the following:
Xn, X2, NG, S1, F1, or E1.

Specifically, the RLF information further includes: a cell global identity (CGI) of the access cell.

An embodiment of the present disclosure further provides a terminal, including a memory, a processor, and a program stored on the memory and configured to be executed on the processor, wherein, when executing the program, the processor implements the following steps:
recording radio link failure (RLF) information, in a process of the terminal performing a radio resource control (RRC) connection re-establishment or a RRC connection establishment, the RLF information including at least one of the following: a tracking area code (TAC), a tracking area identifier (TAI) and a system identifier of a terminal access cell, wherein the RLF information is related to a time of RRC connection establishment or RRC connection re-establishment;
reporting the RLF information to a network side device.

Optionally, when executing the program of the recording the radio link failure (RLF) information, in the process of the terminal performing the radio resource control (RRC) connection re-establishment or the RRC connection establishment, the processor implements the following step:
recording the RLF information when the terminal sends an RRC connection re-establishment request or an RRC connection establishment request.

Further, the RLF information further includes: access time information, the access time information being used to indicate a length of time from a handover failure or a radio link failure to a RRC connection establishment or RRC connection re-establishment made by the terminal.

Further, when executing the program, the processor further implements the following steps:
starting a first timer when a handover failure or a radio link failure occurs at the terminal;
when executing the program of the recording the RLF information when the terminal sends the RRC connection re-establishment request or the RRC connection establishment request, the processor implementing the following step:
   recording the RLF information if the first timer is in operation, when the terminal sends the RRC connection re-establishment request or the RRC connection establishment request.

Optionally, when executing the program, the processor further implements the following step:
obtaining configuration information of the first timer sent by the network side device via air interface signalling.

Optionally, when executing the program of the recording the RLF information in case the terminal sends an RRC connection establishment request, the processor implements the following step:
recording the RLF information when the RRC connection establishment request is triggered for a first time after a handover failure or a radio link failure occurs at the terminal.

Specifically, wherein the system identifier is used to indicate one of the following:
an access cell is an evolved packet core (EPC) system;
the access cell is a fifth-generation core (5GC) system;
the access cell is a universal terrestrial radio access (UTRA) system;
the access cell is a wireless fidelity (WIFI) system.

Specifically, when executing the program of reporting the RLF information to the network side device, the processor implements the following step:
sending the RLF information to the network side device via air interface signalling.

Specifically, the RLF information further includes: a cell global identity (CGI) of the access cell.

An embodiment of the present disclosure further provides a network side device, including: a memory, a processor and a program stored on the memory and configured to be executed on the processor; wherein, when executing the program, the processor implements the following steps:
receiving, via a transceiver, radio link failure (RLF) information from a terminal;
wherein, the RLF information includes at least one of the following: a tracking area code (TAC), a tracking area identifier (TAI) and a system identifier of a terminal access cell, wherein the RLF information is related to a time of RRC connection establishment or RRC connection re-establishment.

Optionally, the RLF information further includes: access time information, the access time information being used to indicate a length of time from a handover failure or a radio link failure to a RRC connection establishment or RRC connection re-establishment made by the terminal.

Optionally, when executing the program, the processor further implements the following step:
sending configuration information of the first timer to the terminal via air interface signalling.

Specifically, the system identifier is used to indicate one of the following:
an access cell is an evolved packet core (EPC) system;
the access cell is a fifth-generation core (5GC) system;
the access cell is a universal terrestrial radio access (UTRA) system;
the access cell is a wireless fidelity (WIFI) system.

Specifically, when executing the program, the processor further implements the following steps:
receiving the RLF information from the terminal via air interface signalling;
wherein the RLF information is passed between network side devices or within the network side device.

Further, an interface used to pass the RLF information comprises at least one of the following:
Xn, X2, NG, S1, F1, or E1.

Specifically, the RLF information further includes: a cell global identity (CGI) of the access cell.

An embodiment of the present disclosure further provides a terminal, including:
a recording module, configured to record radio link failure (RLF) information, in a process of the terminal performing a radio resource control (RRC) connection re-establishment or a RRC connection establishment, the RLF information including at least one of the following: a tracking area code (TAC), a tracking area identifier (TAI) and a system identifier of a terminal access cell, wherein the RLF information is related to a time of RRC connection establishment or RRC connection re-establishment;
a reporting module, configured to report the RLF information to a network side device.

An embodiment of the present disclosure further provides a network side device, including:
a receiving module, configured to receive radio link failure (RLF) information sent by a terminal;
wherein the RLF information includes at least one of the following: a tracking area code (TAC), a tracking area identifier (TAI) and a system identifier of a terminal access cell, wherein the RLF information is related to a time of RRC connection establishment or RRC connection re-establishment.

An embodiment of the present disclosure further provides a processor-readable storage medium storing thereon a program, when executed by the processor, the program implements the above method of reporting radio link failure information or the above method of obtaining radio link failure information.

The beneficial effects of the present disclosure are as follows.

The above solution improves the accuracy of MRO by recording RLF information including at least one of a TAC, a TAI and a system identifier of a terminal access cell, in a process of the terminal performing a RRC connection re-establishment or a RRC connection establishment, and reporting the recorded RLF information to the network side device.

### BRIEF DESCRIPTION OF THE DRAWINGS

Fig. 1 is a schematic flowchart of a terminal recording and reporting RLF reports;
Fig. 2 is a schematic flowchart of a too early handover scenario;
Fig. 3 is a schematic flowchart of a too late handover scenario;
Fig. 4 is a schematic flowchart of a method of reporting radio link failure information according to an embodiment of the present disclosure;
Fig. 5 is a schematic flowchart of scenario one of a method of reporting radio link failure information according to an embodiment of the present disclosure;
Fig. 6 is a schematic flowchart of scenario two of a method of reporting radio link failure information according to an embodiment of the present disclosure;
Fig. 7 is a schematic flowchart of scenario three of a method of reporting radio link failure information according to an embodiment of the present disclosure;
Fig. 8 is a schematic flowchart of scenario four of a method of reporting radio link failure information according to an embodiment of the present disclosure;
Fig. 9 is a schematic flowchart of scenario five of a method of reporting radio link failure information according to an embodiment of the present disclosure;
Fig. 10 is a schematic flowchart of a method of obtaining radio link failure information according to an embodiment of the present disclosure;
Fig. 11 is a schematic block diagram of a terminal according to an embodiment of the present disclosure;
Fig. 12 is structural diagram of a terminal according to an embodiment of the present disclosure;
Fig. 13 is a schematic block diagram of a network side device according to an embodiment of the present disclosure;
Fig. 14 is structural diagram of a network side device according to an embodiment of the present disclosure.

### DETAILED DESCRIPTION

In order to make the purpose, the technical solutions and advantages of the present disclosure clearer, the present disclosure will be described in detail below with reference to the drawings and specific embodiments.

In describing the embodiments of this disclosure, some of the concepts used in the following description are first explained as below.

### 1, Radio Link Failure (RLF) Report Overview

RLF report is a kind of report recorded at the terminal side, mainly covering two kinds of recording scenarios: handover failure and radio link failure, and one RLF report can only represent the recording of one scenario.

### 1.1.RLF report content introduction

RLF report contains the following contents:
S11, the measurement result of the last service cell accessed by the terminal;
S12, the measurement result of the neighborhood after the terminal confirms the handover failure or radio link failure;
S13, the terminal location information;
S14, the identification information of the cell that the terminal fails to access, such as Cell Global Identity (CGI) / Physical Cell Identity (PCI) + frequency point;
S15, the identification information terminal reconstruction of the cell where the terminal reestablishes the connection;
S16, the length of time between the terminal's last confirmation of receiving the handover initiation message and the connection failure;
S17, the reason of connection failure, handover failure or radio link failure;
S18, Cell-RadioNetworkTemporaryIdentifier (C-RNTI) used at the time of connection failure;
S19, radio link failure sub-cause, T310 timeout or random-access problem or radio link control protocol (RLC) layer reaches maximum retransmission or Beam Failure Recovery Failure (BFRF);
520, the time elapsed after the terminal confirms the connection failure until the terminal reports the RLF;
S21, the Tracking Area Code (TAC) of the cell that the terminal fails to access;
522, the CGI of the cell that the terminal initiates RRC connection establishment or RRC connection re-establishment to access.

### 1.2. RLF report reporting process

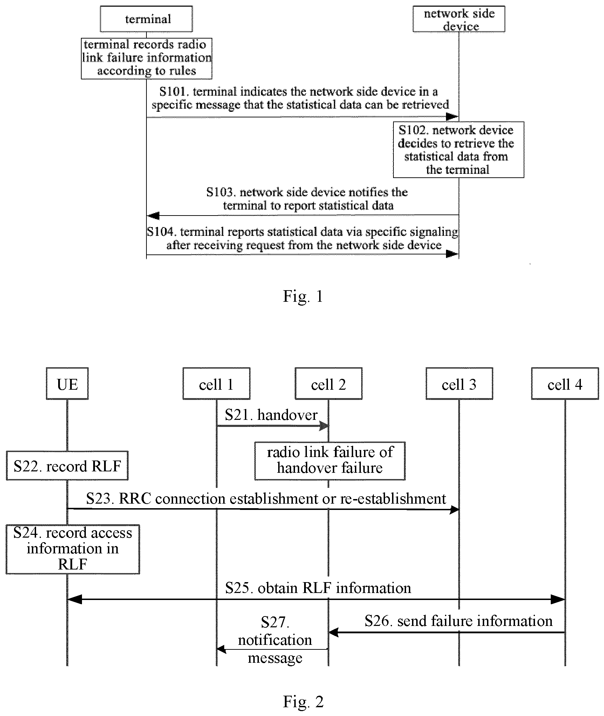

The RLF report is kept in the terminal for a maximum of 48 hours, and within 48 hours, the terminal can notify the network to retrieve the RLF report recorded at the terminal side, as shown in Fig. 1.

It should be noted that in step S101 of Fig. 1, the terminal indicates the network side device in a specific message that in the RLF report data recorded can be retrieved, the specific message referring to a connection establishment completion message or a connection recovery completion message or a connection reassignment completion message or a connection re-establishment completion message.

After collecting the RLF reports reported by the terminal, the network side device can forward the collected terminal data to other cells via interface messages.

### 2, Mobility Robustness Optimisation (MRO) feature introduction

MRO features are mainly used to find and solve the parameter configuration problems in the mobility process, and three types of failures are defined: too early handover, to late handover, and wrong cell handover.

Too late handover: after a period of stable residence in the serving cell, the terminal has a radio link failure, and the terminal tries to connect to a different cell by reestablishing the radio resource control (RRC) connection.

Too early handover: the terminal fails to connect to the target cell during the handover procedure, or the terminal successfully connects to the target cell, but a radio link failure occurs soon afterwards, and then the terminal reestablishes the RRC connection to try to connect to the serving cell.

Wrong cell handover: the terminal fails to connect to the target cell during handover procedure, or successfully connects to the target cell but the radio link failure occurs soon afterwards, and then the terminal reestablishes the RRC connection to try to connect to the other cells that are different from the target cell and the source cell.

The too early handover scenario is shown in Fig. 2, and the specific process is as below.

Step S21: the terminal handovers from cell 1 to cell 2.

Step S22: if a handover failure or a radio link failure occurs during the handover procedure or just after the handover has been completed, the terminal records the radio link failure information in the RLF report.

Step S23: the terminal initiates RRC connection establishment or RRC connection re-establishment to access cell 3, the connection may be successful or unsuccessful.

Step S24: the terminal records in the RLF report the CGI information of the cell that the terminal initiates RRC connection establishment or RRC connection re-establishment to access.

Step S25: the terminal accesses cell 4 and obtains the RLF information retained by the terminal in cell 4. Cell 4 may be the same cell as cell 3.

Step S26: cell 4 sends the failure message to cell 2.

Step S27: cell 2 analyzes that a too early handover has occurred and cell 1 is required to optimize the parameters to resolve it, and cell 2 sends a notification message to cell 1.

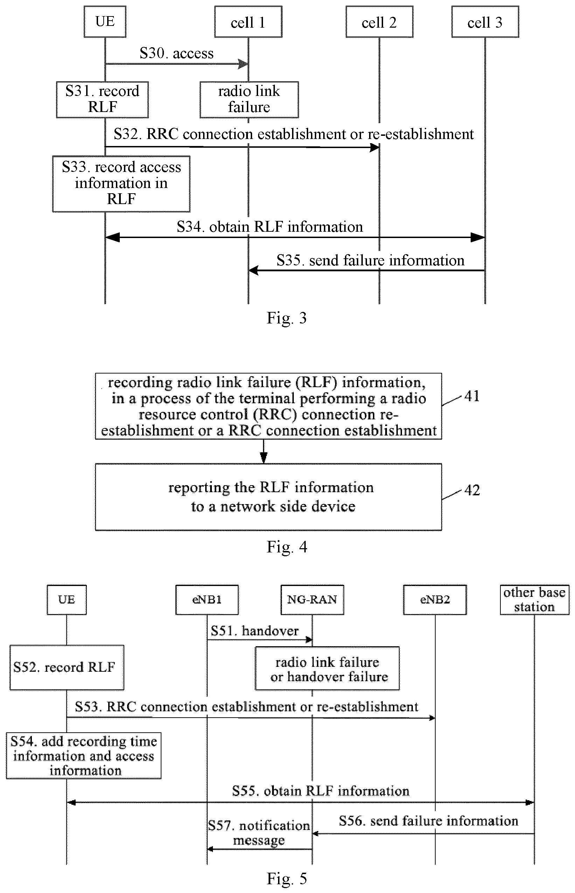

The too late handover scenario is shown in Fig. 3, and the specific flow is as below.

Step S30: the terminal has been stably connected to cell 1 for a longer period of time.

Step S31: if radio link failure occurs, the terminal records the radio link failure information in the RLF report.

Step S32: the terminal initiates RRC connection establishment or RRC connection re-establishment to access cell 2, and the connection may be successful or unsuccessful.

Step S33: the terminal records in the RLF report the CGI information of the cell that the terminal initiates RRC connection establishment or RRC connection re-establishment to access.

Step S34: the terminal accesses cell 3 and obtains the RLF information retained by the terminal. Cell 3 may be the same cell as cell 2.

Step S35: cell 3 sends a failure message to cell 1. Cell 1 analyzes that a too late handover has occurred and optimizes its own handover parameters.

The above cells 1~4 may be cells in the same base station or cells in different base stations. If they are cells in the same base station, the relevant messages are internal messages within the base station, if they are cells in different base stations, the relevant messages are interface messages between base stations.

Cell 1~4 may be EPC system or 5GC system and may be 4G (corresponding to LTE) or 5G (corresponding to NR) access technology.

As can be seen from the above, after the handover failure or radio link failure, the terminal only records the CGI information of the access cell after initiating RRC connection establishment or RRC connection re-establishment to the eNB base station. When this information is used as the basis for analyzing the MRO failure, the information is incomplete. The problems are described as below.

1) From the CGI information alone, it is not possible to determine whether the cell that is accessed or re-established access to is a 4G system or a 5G system. If it is a 4G system, it means that too early inter-system handover or too late inter-system handover may have occurred, and the parameters related to inter-system handover need to be optimized. If it is a 5G system, it means the terminal is within the same system and there is no inter-system MRO problem.

2) If RRC connection establishment occurs, the time information also needs to be determined: if RRC connection establishment occurs soon after the handover failure or radio link failure, it indicates a correlation between the RRC connection establishment cell and the original handover failure or radio link failure, and there may be an MRO problem; if the time interval is very long, it means that the correlation is not significant and the MRO problem should not be considered.

The present disclosure provides a method of reporting radio link failure information, a method of obtaining radio link failure information, a terminal and a network side device.

As shown in Fig. 4, an embodiment of the present disclosure provides a method of reporting radio link failure information, applied to a terminal, including:
Step 41, recording radio link failure (RLF) information, in a process of the terminal performing a radio resource control (RRC) connection re-establishment or a RRC connection establishment;
It is noted that the RLF information (optionally, the RLF information may be RLF REPORT) at least one of the following: a tracking area code (TAC), a tracking area identifier (TAI) and a system identifier of a terminal access cell, and it is further noted that the RLF information is related to a time of RRC connection establishment or RRC connection re-establishment;
Specifically, the system identifier is used to indicate one of the following:
   the access cell is an evolved packet core (EPC) system;
   the access cell is a fifth-generation core (5GC) system;
   the access cell is a universal terrestrial radio access (UTRA) system;
   the access cell is a wireless fidelity (WIFI) system.

Step 42, reporting the RLF information to a network side device.

It should be noted that step 41 is implemented in such a way that recording the RLF information when the terminal sends an RRC connection re-establishment request or an RRC connection establishment request.

It should be further noted that in case the terminal sends an RRC connection establishment request, the RLF information is recorded only when the terminal first triggers an RRC connection establishment request after a handover failure or a radio link failure, and the RLF information is not recorded if the RRC connection process occurs again.

It should also be noted that after the terminal has recorded the RLF information, it can send the RLF information to the network side device via air interface signalling.

Further, after passing the RLF information to the network side device, the RLF information is passed among the network side devices or within the network side devices.

Specifically, the terminal can transfer the RLF information within the network side device via the F1 interface and/or the E1 interface; if direct communication is possible between the network side devices, the terminal can transfer the RLF information via the Xn interface and/or the X2 interface; if direct communication is not possible between the network side devices, the RLF information needs to be forwarded through the core network, and the transfer of RLF information between the core network and the network side devices is realized mainly through the NG interface and/or S1 interface.

It should be further noted that in order to ensure that the RLF information is related to a time of RRC connection establishment or RRC connection re-establishment, the following two implementation methods are mainly used in the present embodiment, and they are explained in detail below.

### Implementation 1.

Specifically, in this case, the RLF information also includes: access time information, the access time information being used to indicate a length of time from a handover failure or a radio link failure to a RRC connection establishment or RRC connection re-establishment made by the terminal.

It should be noted that in this case, the length of time from a handover failure or a radio link failure to a RRC connection establishment or RRC connection re-establishment made by the terminal is recorded in the RLF information, and this length of time is used by the network side device to determine whether the RLF information can be used when performing MRO.

Note that the RLF information should also include the Cell Global Identifier (CGI) of the RRC connection establishment or RRC connection re-establishmentcell, which must be recorded in the RLF information, i.e., in this implementation, the terminal needs to record at least one of the TAC, TAI and system identifier of the access cell in addition to the CGI of the access cell during the RRC connection re-establishment or RRC connection establishment.

Several scenarios are described below.

### Scenario 1: too early inter-system handover

As shown in Fig. 5, eNB1 and eNB2 in Fig. 5 are cells of LTE base stations connected to the EPC system, NG-RAN (5G radio access network) is connected to the 5GC system, which may be an NR base station cell or an LTE base station cell.

Specifically, the process is implemented as below.

Step S51: the terminal handovers from eNB 1 to NG-RAN.

Step S52: if a handover failure or a radio link failure occurs during the handover process or just after the handover is completed, the terminal records the radio link failure information in the RLF report.

Step S53: the terminal initiates RRC connection establishment or RRC connection re-establishment to access the eNB2, and the access may be successful or unsuccessful.

Step S54: the TAC and/or TAI and/or the system identifier of the access cell are added to the RLF report and the time information is also recorded;
It should be noted that the TAC and/or TAI and/or the system identifier of the access cell recorded by the terminal can be called access information.

Specifically, when initiating the RRC connection re-establishment process in step S53, in addition to the CGI of the access cell, it is also necessary to record the TAC and/or TAI and/or the system identifier of the access cell, i.e., whether the access cell is an EPC system or a 5GC system; and it is also necessary to record the access time information, i.e., the length of time from the radio link failure or handover failure in step S52 to the time when the re-establishment attempt is initiated.

Specifically, when initiating the RRC establishment process in step S53, in addition to the CGI of the access cell, the TAC and/or TAI and/or the system identifier of the access cell, i.e., whether the access cell is an EPC system or a 5GC system; and it is also necessary to record the access time information, i.e., the length of time from the radio link failure or handover failure in step S52 to the RRC establishment attempt; and it should be noted that, in this case, the recorded cell that the RRC establishment tries to access is the cell that the terminal tries to access for the first time after the radio link failure or handover failure, and the cell information will not be recorded if the RRC connection process occurs later.

Step S55: the terminal accesses other base stations and obtains the RLF information reserved by the terminal at other base stations. The other base stations may be the same base station as eNB2.

Step S56: the other base station sends the failure message to the NG-RAN.

Step S57: the NG-RAN analyzes that a too early handover has occurred and eNB 1 is required to optimize the parameters to resolve it, and the NG-RAN sends a notification message to eNB 1.

### Scenario 2: too early handover within a same system

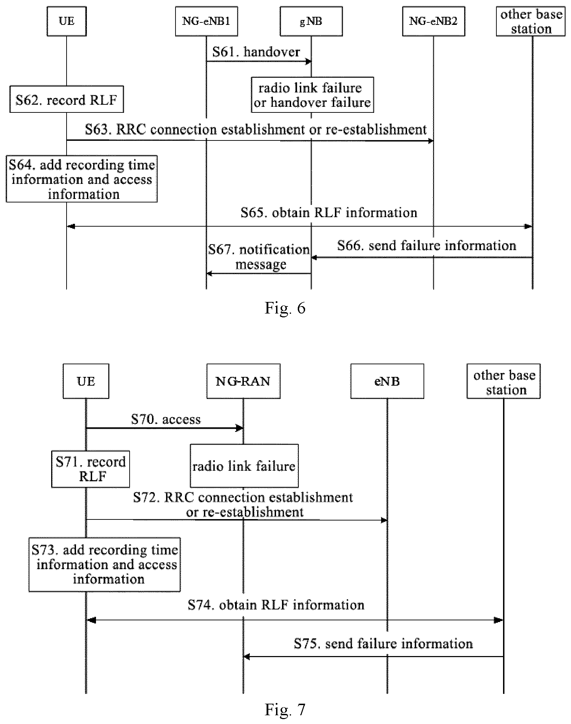

The too early handover scenario in a same system is similar to the inter-system scenario in scenario 1. The NG- eNB1 and NG-eNB2 in Fig. 6 are cells of LTE base station connected to the 5GC system, and the gNB is a cell of an NR base station cell connected to the 5GC system.

The information to be recorded by the terminal is the same as that in Scenario 1, so it is not described here, and the specific implementation process is shown in Fig. 6.

### Scenario 3: too late inter-system handover scenario

As shown in Fig. 7, the NG-RAN in Fig. 7 is connected to the 5GC system, which may be a cell of a NR base station or an LTE base station; the eNB is a cell of an LTE base station connected to EPC system.

The specific implementation process is as below.

Step S70: the terminal has been stably connected to the NG-RAN for a long period of time.

Step S71: if radio link failure occurs, the terminal records the radio link failure information in the RLF report.

Step S72: the terminal initiates RRC connection establishment or RRC connection re-establishment to access the eNB, and the access may be successful or unsuccessful.

Step S73: The terminal records in the RLF report the CGI information of the cell that the terminal initiates RRC connection establishment or RRC connection re-establishment to access, the TAC and/or TAI of the access cell and/or the system identifier of the access cell are added, and the time information is also recorded.

Specifically, when initiating the RRC connection re-establishment process in step S72, in addition to recording the CGI of the access cell, it is necessary to record the TAC and/or TAI and/or system identifier of the cell, i.e., whether the access cell is an EPC system or a 5GC system; and it is also necessary to record the access time information, i.e., the length of time from the radio link failure in step S71 to RRC re-establishment attempt to access.

Specifically, when initiating the RRC establishment process in step S72, in addition to the CGI of the access cell, it is necessary to record the TAC and/or TAI and/or the system identifier of the cell, i.e., whether the access cell is an EPC system or a 5GC system; and it is also necessary to record the access time information, i.e., the length of time from the radio link failure at step S71 to the RRC re-establishment attempt to access; it should be noted that, in this case, the recorded cell that the RRC establishment tries to access is the cell that the terminal tries to access for the first time after the radio link failure or handover failure, and the cell information will not be recorded if the RRC connection process occurs later.

Step S74: The terminal accesses other base stations and obtains the RLF information retained by the terminal. The other base station and the eNB may be the same base station.

Step S75: the other base station sends the failure message to the NG-RAN, which analyzes the too late handover has occurred and optimizes its own handover parameters.

### Scenario 4: too late handover within a same system.

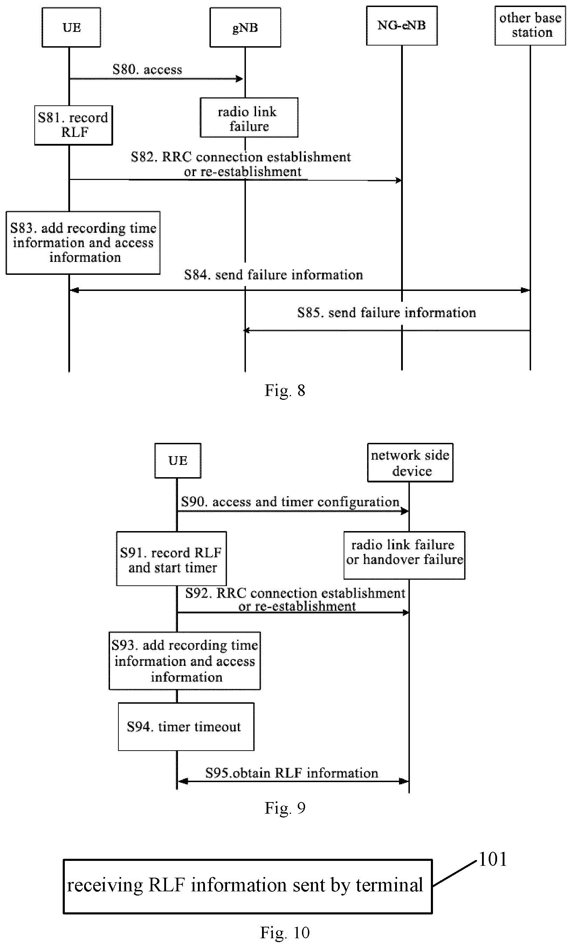

The scenario of the too late handover within a same system is similar to the inter-system scenario in scenario 3. NG-eNB in Fig. 8 is the cell of the LTE base station connected to the 5GC system, and the gNB is the cell of the NR base station connected to the 5GC system.

The information to be recorded is the same as that in scenario 3, so it is not described here, and the specific implementation process is shown in Fig. 8.

### Implementation method 2.

Specifically, in this case, before step 41, the method of the present disclosure embodiment further includes:
starting the first timer when a handover failure or a radio link failure occurs at the terminal.

It is noted that the first timer can be considered an MRO related timer, i.e., a timer related to the MRO.

Further, the specific implementation of step 41 is as below:
recording the RLF information if the first timer is in operation, when the terminal sends the RRC connection re-establishment request or the RRC connection establishment request.

It should also be noted that the terminal does not record the RLF information if the first timer is not in operation, when the terminal sends a RRC connection re-establishment request or an RRC connection establishment request.

In other words, in this case, the RLF information is recorded only during the operation of the first timer, and the RLF information is not recorded after the first timer times out, so that the recorded RLF information can be used within the available time range, that is, as long as the network side device receives the RLF information, the RLF information can be used for MRO.

It should also be noted that the RLF information should also include: the Cell Global Identifier (CGI) of the access cell. The CGI of the access cell must be recorded in the RLF information. In other words, in this implementation, the terminal needs to record at least one of the TAC, TAI and system identifier of the access cell in addition to the CGI of the access when the first timer is in operation during the RRC connection re-establishment or RRC connection establishment.

Specifically, in order to ensure the smooth use of the first timer, the method of this disclosure embodiment also includes:
obtaining configuration information of the first timer sent by the network side device via air interface signalling.

Specifically, the configuration information may include the start time of the first timer and the time duration of the timer.

The implementation process of this implementation is specifically described as below with the specific implementation scenarios.

### Scenario 5: too early inter-system handover

As shown in Fig. 9, scenario 5 mainly describes the principle of the timer scheme, and it should be noted that scenario 5 contains the specific scenarios of the above scenario 1 to 4, and the network side device may be the network structure in the above scenario 1 to 4.

Step S90: the network side device configures the MRO timer for the terminal.

Step S91: if a handover failure or a radio link failure may occur, the terminal starts the MRO timer.

Step S92: the terminal may perform RRC connection establishment or RRC connection re-establishment.

Step S93: the terminal determines that the MRO timer is in operation and adds the recorded information to the RLF information; if the MRO timer is not in operation, no information is recorded.

Specifically, when initiating the RRC connection re-establishment process in step S92, in addition to recording the CGI of the access cell, it also needs to record the TAC and/or TAI and/or the system identifier of the cell, i.e., whether the access cell is an EPC system or a 5GC system; or
specifically, when initiating the RRC establishment process in step S92, in addition to the CGI of the access cell, it also needs to record the TAC and/or TAI and/or the system identifier of the cell, i.e., whether the access cell is an EPC system or a 5GC system; further, in this case, the recorded cell that the RRC establishment tries to access is the cell that the terminal tries to access for the first time after the radio link failure or handover failure, and the cell information will not be recorded if the RRC connection process occurs later.

Step S94: the MRO timer times out and stops running.

Step S95: the terminal accesses the network side device and obtains the RLF information retained by the terminal.

It should be noted that, the embodiments of the present disclosure, by recording at least one of the following: a tracking area code (TAC), a tracking area identifier (TAI) and a system identifier of a terminal access cell, in a process of the terminal performing a radio resource control (RRC) connection re-establishment or a RRC connection establishment, the RLF information including, and reporting the RLF information to a network side device, improve the MRO function, increase the accuracy of MRO and enhance the performance of handover.

As shown in Fig. 10, a method of obtaining radio link failure information of the embodiment of the present disclosure, applied to the network side device, includes the following.

Step 101, receiving radio link failure (RLF) information sent by the terminal;
wherein the RLF information includes at least one of the following: a tracking area code (TAC), a tracking area identifier (TAI) and a system identifier of a terminal access cell, wherein the RLF information is related to a time of RRC connection establishment or RRC connection re-establishment.

Optionally, the RLF information further includes: access time information, the access time information being used to indicate a length of time from a handover failure or a radio link failure to a RRC connection establishment or RRC connection re-establishment made by the terminal.

Optionally, before the receiving the radio link failure (RLF) information sent by the terminal, further includes:
sending configuration information of a first timer to the terminal via air interface signalling.

Specifically, the system identifier is used to indicate one of the following:
an access cell is an evolved packet core (EPC) system;
the access cell is a fifth-generation core (5GC) system;
the access cell is a universal terrestrial radio access (UTRA) system;
the access cell is a wireless fidelity (WIFI) system.

Specifically, the receiving the radio link failure (RLF) information sent by the terminal, includes:
receiving the RLF information sent by the terminal via air interface signalling;
wherein, the RLF information is passed between network side devices or within the network side device.

Further, an interface used to pass the RLF information includes at least one of the following:
Xn, X2, NG, S1, F1, or E1.

Specifically, the RLF information further includes: a cell global identity (CGI) of the access cell.

It is noted that all the descriptions of the network side devices in the above embodiments are applicable to the embodiment of the method of obtaining radio link failure information, and the same technical effect can be achieved.

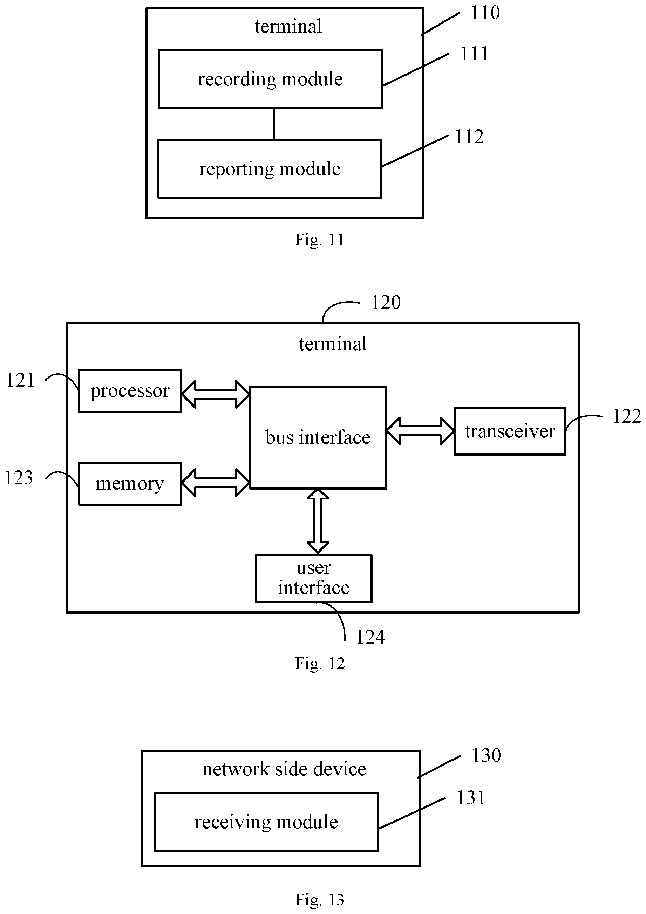

As shown in Fig. 11, an embodiment of the present disclosure provides a terminal 110, comprising:
a recording module 111, configured to record radio link failure (RLF) information, in a process of the terminal performing a radio resource control (RRC) connection re-establishment or a RRC connection establishment, the RLF information including at least one of the following: a tracking area code (TAC), a tracking area identifier (TAI) and a system identifier of a terminal access cell, wherein the RLF information is related to a time of RRC connection establishment or RRC connection re-establishment;
a reporting module 112, configured to report the RLF information to a network side device.

Further, the recording module 111 is configure for:
recording the RLF information when the terminal sends an RRC connection re-establishment request or an RRC connection establishment request.

Optionally, the RLF information further includes: access time information, the access time information being used to indicate a length of time from a handover failure or a radio link failure to a RRC connection establishment or RRC connection re-establishment made by the terminal.

Optionally, before the recording module 111 recording the RLF information when the terminal sends the RRC connection re-establishment request or the RRC connection establishment request, further includes:
starting module, configured to start a first timer when a handover failure or a radio link failure occurs at the terminal;
the recording module 111, configured for:
   recording the RLF information if the first timer is in operation, when the terminal sends the RRC connection re-establishment request or the RRC connection establishment request.

Further, before the starting the first timer when the handover failure or the radio link failure occurs at the terminal, further includes:
a first obtaining module, configured to obtain configuration information of the first timer sent by the network side device via air interface signalling.

Further, after the starting module starting a first timer when a handover failure or a radio link failure occurs at the terminal, further includes:
an execution module, configured to not record the RLF information if the first timer is not in operation, when the terminal sends a RRC connection re-establishment request or an RRC connection establishment request.

Optionally, in case the terminal sends an RRC connection establishment request, the recording module 111 is configured for:
recording RLF information when the RRC connection establishment request is triggered for the first time after a handover failure or a radio link failure at the terminal.

Specifically, the system identifier is used to indicate one of the following:
the access cell is an evolved packet core (EPC) system;
the access cell is a fifth-generation core (5GC) system;
the access cell is a universal terrestrial radio access (UTRA) system;
the access cell is a wireless fidelity (WIFI) system.

Specifically, the reporting module 112 is configured for:
sending RLF information to the network side device via air interface signalling.

Specifically, the RLF information further includes: a cell global identity (CGI) of the access cell.

It should be noted that the terminal embodiment is a terminal corresponding to the method embodiment described above. All implementations of the above method embodiment are applicable to this terminal embodiment, and the same technical effect can be achieved.

As shown in Fig. 12, an embodiment of the present disclosure also provides a terminal 120, including a processor 121, a transceiver 122, a memory 123, and a program stored on the memory 123 and configured to be executed on the processor 121; wherein transceiver 122 is connected to processor 121 and memory 123 via a bus interface, wherein the processor 121 is configured to read the program in the memory and execute the following processes:
recording radio link failure (RLF) information, in a process of the terminal performing a radio resource control (RRC) connection re-establishment or a RRC connection establishment, the RLF information including at least one of the following: a tracking area code (TAC), a tracking area identifier (TAI) and a system identifier of a terminal access cell, wherein the RLF information is related to a time of RRC connection establishment or RRC connection re-establishment;
reporting the RLF information to a network side device through transceiver 122.

It is noted that in Fig. 12, the bus architecture may include any number of interconnected buses and bridges, specifically various circuits such as one or more processors represented by the processor 121 and the memory represented by the memory 123 are connected together. The bus architecture can also connect various other circuits such as peripheral devices, voltage regulators, power management circuits, etc., which are all known in the field, and therefore, will not be further described herein. The bus interface provides the interface. The transceiver 122 may be a plurality of elements, that is, including a transmitter and a receiver, and provide a unit for communicating with various other devices on the transmission medium. For different senders, the user interface 124 may also be an interface capable of connecting externally or internally to required equipment. The connected equipment includes, but is not limited to, a keypad, a display, a speaker, a microphone, a joystick, etc. The processor 121 is responsible for managing the bus architecture and general processing, and the memory 123 can store data used by the processor 121 when performing operations.

Further, when executing the program of the recording the radio link failure (RLF) information, in the process of the terminal performing the radio resource control (RRC) connection re-establishment or the RRC connection establishment, the processor implements the following step:
recording the RLF information when the terminal sends an RRC connection re-establishment request or an RRC connection establishment request.

Optionally, the RLF information further includes: access time information, the access time information being used to indicate a length of time from a handover failure or a radio link failure to a RRC connection establishment or RRC connection re-establishment made by the terminal.

Optionally, when executing the program, the processor further implements the following steps:
starting a first timer when a handover failure or a radio link failure occurs at the terminal;
when executing the program of the recording the RLF information when the terminal sends the RRC connection re-establishment request or the RRC connection establishment request, the processor implementing the following step:
   recording the RLF information if the first timer is in operation, when the terminal sends the RRC connection re-establishment request or the RRC connection establishment request.

Further, when executing the program, the processor further implements the following step:
obtaining configuration information of the first timer sent by the network side device via air interface signalling.

Further, when executing the program, the processor implements the following step:
not recording the RLF information if the first timer is not in operation when the terminal sends an RRC connection re-establishment request or an RRC connection establishment request.

Optionally, when executing the program of the recording the RLF information in case the terminal sends an RRC connection establishment request, the processor implements the following step:
recording the RLF information when the RRC connection establishment request is triggered for a first time after a handover failure or a radio link failure occurs at the terminal.

Specifically, the system identifier is used to indicate one of the following:
an access cell is an evolved packet core (EPC) system;
the access cell is a fifth-generation core (5GC) system;
the access cell is a universal terrestrial radio access (UTRA) system;
the access cell is a wireless fidelity (WIFI) system.

Specifically, when executing the program of reporting the RLF information to the network side device, the processor implements the following step:
sending the RLF information to the network side device via air interface signalling.

Specifically, the RLF information further includes: a cell global identity (CGI) of the access cell.

An embodiment of the present disclosure further provides a processor-readable storage medium storing thereon a program, when executed by the processor, the program implements the method of reporting radio link failure information.

As shown in Fig. 13, an embodiment of the present disclosure provides a network side device, including:
a receiving module 131, configured to receive radio link failure (RLF) information sent by a terminal;
wherein the RLF information includes at least one of the following: a tracking area code (TAC), a tracking area identifier (TAI) and a system identifier of a terminal access cell, wherein the RLF information is related to a time of RRC connection establishment or RRC connection re-establishment.

Optionally, the RLF information further comprises: access time information, the access time information being used to indicate a length of time from a handover failure or a radio link failure to a RRC connection establishment or RRC connection re-establishment made by the terminal.

Optionally, before the receiving module 131 receiving receive radio link failure (RLF) information sent by the terminal, further includes:
a sending module, configured to send configuration information of the first timer to the terminal via air interface signalling.

Specifically, the system identifier is used to indicate one of the following:
an access cell is an evolved packet core (EPC) system;
the access cell is a fifth-generation core (5GC) system;
the access cell is a universal terrestrial radio access (UTRA) system;
the access cell is a wireless fidelity (WIFI) system.

Specifically, the receiving module 131 is configured for:
receiving the RLF information from the terminal via air interface signalling;
wherein the RLF information is passed between network side devices or within the network side device.

Further, the interface used to pass the RLF information comprises at least one of the following:
Xn, X2, NG, S1, F1, or E1.

Specifically, the RLF information further includes: a cell global identity (CGI) of the access cell.

It should be noted that the network side device embodiment is a network side device corresponding to the method embodiment described above. All implementations of the above method embodiment are applicable to this network side device embodiment, and the same technical effect can be achieved.

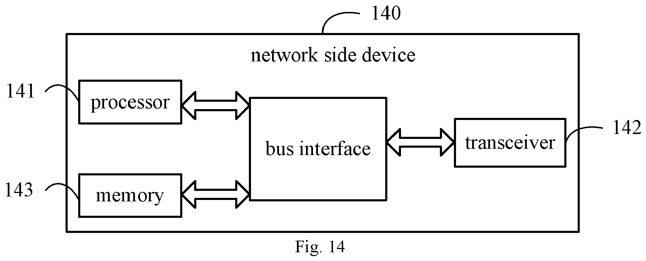

As shown in Fig. 14, an embodiment of the present disclosure also provides a network side device 140, including a processor 141, a transceiver 142, a memory 143, and a program stored on the memory 143 and configured to be executed on the processor 141; wherein transceiver 142 is connected to processor 141 and memory 143 via a bus interface, wherein the processor 141 is configured to read the program in the memory and execute the following processes:
receiving, via a transceiver, radio link failure (RLF) information from a terminal;
wherein, the RLF information includes at least one of the following: a tracking area code (TAC), a tracking area identifier (TAI) and a system identifier of a terminal access cell, wherein the RLF information is related to a time of RRC connection establishment or RRC connection re-establishment.

It is noted that in Fig. 14, the bus architecture may include any number of interconnected buses and bridges, specifically various circuits such as one or more processors represented by the processor 141 and the memory represented by the memory 143 are connected together. The bus architecture can also connect various other circuits such as peripheral devices, voltage regulators, power management circuits, etc., which are all known in the field, and therefore, will not be further described herein. The bus interface provides the interface. The transceiver 142 may be a plurality of elements, that is, including a transmitter and a receiver, and provide a unit for communicating with various other devices on the transmission medium. The processor 141 is responsible for managing the bus architecture and general processing, and the memory 143 can store data used by the processor 141 when performing operations.

Optionally, the RLF information further includes: access time information, the access time information being used to indicate a length of time from a handover failure or a radio link failure to a RRC connection establishment or RRC connection re-establishment made by the terminal.

Optionally, when executing the program, the processor further implements the following step:
sending configuration information of the first timer to the terminal via air interface signalling.

Specifically, the system identifier is used to indicate one of the following:
an access cell is an evolved packet core (EPC) system;
the access cell is a fifth-generation core (5GC) system;
the access cell is a universal terrestrial radio access (UTRA) system;
the access cell is a wireless fidelity (WIFI) system.

Specifically, when executing the program, the processor further implements the following steps:
receiving the RLF information from the terminal via air interface signalling;
wherein the RLF information is passed between network side devices or within the network side device.

Further, the interface used to pass the RLF information comprises at least one of the following:
Xn, X2, NG, S1, F1, or E1.

Specifically, the RLF information further comprises: a cell global identity (CGI) of the access cell.

The network side device can be a Base Transceiver Station (BTS) in Global System of Mobile communication (GSM) or Code Division Multiple Access (CDMA), or a NodeB (NB) in Wideband Code Division Multiple Access (WCDMA), or an Evolutional Node B (eNB or eNodeB) in LTE, or a relay station or access point, or a Next Generation Node B (ng-NB) in a future 5G network, or a Central Unit (CU) or Distributive Unit (DU), etc., without limitation here.

An embodiment of the present disclosure provides a processor-readable storage medium storing thereon a program, when executed by the processor, the program implements the steps in the method of obtaining radio link failure information.

It should be noted that the above division of various modules of network devices and terminals is only a logical division of functions, which can be fully or partially integrated into a physical entity or physically separated when implemented in practice. These modules can be implemented in the form of software calls through processing elements, or in the form of hardware calls, or in the form of software calls through processing elements for some modules and hardware calls for some modules. For example, the determination module can be a separate processing element or can be integrated in one of the chips of the above-mentioned device, or it can be stored in the memory of the above-mentioned device in the form of program code, which is called by one of the processing elements of the above-mentioned device and performs the functions of the above-mentioned determination module. Other modules can be implemented similarly. In addition, these modules can be integrated in whole or in part or can be implemented independently. The processing element described here can be an integrated circuit with signal processing capabilities. In the implementation, the steps of the method described above, or the individual modules above can be accomplished by integrated logic circuits in the hardware of the processor element or by instructions in the form of software.

For example, each module, unit, subunit, or submodule may be one or more integrated circuits configured to implement the above method, such as: one or more Application Specific Integrated Circuits (ASICs), or one or more digital signal processors (DSPs), or one or more Field Programmable Gate Array (FPGA), etc. Further, when one of the above modules is implemented in the form of a processing element that dispatches program code, the processing element may be a general-purpose processor, such as a Central Processing Unit (CPU) or other processor that can call program code. Alternatively, these modules may be integrated together and implemented in the form of a system-on-a-chip (SOC).

The terms "first," "second," etc. in the description and claims of the present disclosure are used to distinguish similar objects and are not necessarily used to describe a specific order or sequence. It should be understood that the data so used may be interchanged under appropriate circumstances so that the embodiments of the application described herein, such as those illustrated or described herein, are implemented in sequences other than those illustrated or described herein. Furthermore, the terms "comprising" and "having", and any variations thereof, are intended to cover non-exclusive inclusion, for example, a process, method, system, product or device comprising a series of steps or units is not necessarily limited to to those steps or units clearly listed, but may include those not clearly listed, but may include other steps or units not clearly listed or inherent to those processes, methods, products, or devices. In addition, the specification and claims use "and/or" to denote at least one of the connected objects, e.g., A and/or B and/or C, to indicate the seven cases comprising A alone, B alone, C alone, and A and B both, B and C both, A and C both, and A, B, and C all. Similarly, the use of "at least one of A and B" in this specification and in the claims is to be understood as "A alone, B alone, or A and B both".

The above are optional implementations of the present disclosure. It should be pointed out that for a person skilled in the art, several improvements and modifications can be made without departing from the principles of the present disclosure. These improvements and modifications should also fall within the protection scope of the present disclosure.

## Claims

1. A method of reporting radio link failure information, applied to a terminal, comprising:
recording radio link failure (RLF) information, in a process of the terminal performing a radio resource control (RRC) connection re-establishment or a RRC connection establishment, the RLF information comprising at least one of: a tracking area code (TAC), a tracking area identifier (TAI) and a system identifier of a terminal access cell, wherein the RLF information is related to a time of RRC connection establishment or RRC connection re-establishment;
reporting the RLF information to a network side device.

2. The method according to claim 1, wherein, the recording the radio link failure (RLF) information, in the process of the terminal performing the radio resource control (RRC) connection re-establishment or the RRC connection establishment, comprises:
recording the RLF information when the terminal sends an RRC connection re-establishment request or an RRC connection establishment request.

3. The method according to claim 2, wherein, the RLF information further comprises: access time information, the access time information being used to indicate a length of time from a handover failure or a radio link failure to a RRC connection establishment or RRC connection re-establishment made by the terminal.

4. The method according to claim 2, wherein, before the recording the RLF information when the terminal sends the RRC connection re-establishment request or the RRC connection establishment request, further comprises:
starting a first timer when a handover failure or a radio link failure occurs at the terminal;
the recording the RLF information when the terminal sends the RRC connection re-establishment request or the RRC connection establishment request, comprising:
recording the RLF information if the first timer is in operation, when the terminal sends the RRC connection re-establishment request or the RRC connection establishment request.

5. The method according to claim 4, wherein, before the starting the first timer when the handover failure or the radio link failure occurs at the terminal, further comprises:
obtaining configuration information of the first timer sent by the network side device via air interface signalling.

6. The method according to claim 2, wherein the recording the RLF information in case the terminal sends the RRC connection establishment request, comprises:
recording the RLF information when the RRC connection establishment request is triggered for a first time after a handover failure or a radio link failure occurs at the terminal.

7. The method according to claim 1, wherein the system identifier is used to indicate one of the following:
an access cell is an evolved packet core (EPC) system;
the access cell is a fifth-generation core (5GC) system;
the access cell is a universal terrestrial radio access (UTRA) system;
the access cell is a wireless fidelity (WIFI) system.

8. The method according to claim 1, wherein the reporting the RLF information to the network side device, comprises:
sending the RLF information to the network side device via air interface signalling.

9. The method according to any one of claims 1 to 8, wherein, the RLF information further comprises: a cell global identity (CGI) of the access cell.

10. A method of obtaining radio link failure information, applied to a network side device, comprising:
receiving radio link failure (RLF) information sent by a terminal;
wherein the RLF information comprises at least one of: a tracking area code (TAC), a tracking area identifier (TAI) and a system identifier of a terminal access cell, wherein the RLF information is related to a time of RRC connection establishment or RRC connection re-establishment.

11. The method according to claim 10, wherein the RLF information further comprises: access time information, the access time information being used to indicate a length of time from a handover failure or a radio link failure to a RRC connection establishment or RRC connection re-establishment made by the terminal.

12. The method according to claim 10, wherein, before the receiving the radio link failure (RLF) information sent by the terminal, further comprises:
sending configuration information of a first timer to the terminal via air interface signalling.

13. The method according to claim 10, wherein the system identifier is used to indicate one of the following:
an access cell is an evolved packet core (EPC) system;
the access cell is a fifth-generation core (5GC) system;
the access cell is a universal terrestrial radio access (UTRA) system;
the access cell is a wireless fidelity (WIFI) system.

14. The method according to claim 10, wherein, the receiving the radio link failure (RLF) information sent by the terminal, comprises:
receiving the RLF information sent by the terminal via air interface signalling;
wherein, the RLF information is passed between network side devices or within the network side device.

15. The method according to claim 14, wherein, an interface used to pass the RLF information comprises at least one of the following:
Xn, X2, NG, S1, F1, or E1.

16. The method according to any one of claims 10 to 15, wherein, the RLF information further comprises: a cell global identity (CGI) of the access cell.

17. A terminal, comprising a memory, a processor, and a program stored on the memory and configured to be executed on the processor, wherein, when executing the program, the processor implements the following steps:
recording radio link failure (RLF) information, in a process of the terminal performing a radio resource control (RRC) connection re-establishment or a RRC connection establishment, the RLF information comprising at least one of: a tracking area code (TAC), a tracking area identifier (TAI) and a system identifier of a terminal access cell, wherein the RLF information is related to a time of RRC connection establishment or RRC connection re-establishment;
reporting the RLF information to a network side device.

18. The terminal according to claim 17, wherein, when executing the program of the recording the radio link failure (RLF) information, in the process of the terminal performing the radio resource control (RRC) connection re-establishment or the RRC connection establishment, the processor implements the following step:
recording the RLF information when the terminal sends an RRC connection re-establishment request or an RRC connection establishment request.

19. The terminal according to claim 18, wherein the RLF information further comprises: access time information, the access time information being used to indicate a length of time from a handover failure or a radio link failure to a RRC connection establishment or RRC connection re-establishment made by the terminal.

20. The terminal according to claim 18, wherein, when executing the program, the processor further implements the following steps:
starting a first timer when a handover failure or a radio link failure occurs at the terminal;
when executing the program of the recording the RLF information when the terminal sends the RRC connection re-establishment request or the RRC connection establishment request, the processor implementing the following step:
recording the RLF information if the first timer is in operation, when the terminal sends the RRC connection re-establishment request or the RRC connection establishment request.

21. The terminal according to claim 20, wherein, when executing the program, the processor further implements the following step: obtaining configuration information of the first timer sent by the network side device via air interface signalling.

22. The terminal according to claim 18, wherein, when executing the program of the recording the RLF information in case the terminal sends an RRC connection establishment request, the processor implements the following step:
recording the RLF information when the RRC connection establishment request is triggered for a first time after a handover failure or a radio link failure occurs at the terminal.

23. The terminal according to claim 17, wherein the system identifier is used to indicate one of the following:
an access cell is an evolved packet core (EPC) system;
the access cell is a fifth-generation core (5GC) system;
the access cell is a universal terrestrial radio access (UTRA) system;
the access cell is a wireless fidelity (WIFI) system.

24. The terminal according to claim 17, wherein, when executing the program of reporting the RLF information to the network side device, the processor implements the following step:
sending the RLF information to the network side device via air interface signalling.

25. The terminal according to any one of claims 17 to 24, wherein the RLF information further comprises: a cell global identity (CGI) of the access cell.

26. A network side device, comprising: a memory, a processor and a program stored on the memory and configured to be executed on the processor; wherein, when executing the program, the processor implements the following steps:
receiving, via a transceiver, radio link failure (RLF) information from a terminal;
wherein, the RLF information comprises at least one of: a tracking area code (TAC), a tracking area identifier (TAI) and a system identifier of a terminal access cell, wherein the RLF information is related to a time of RRC connection establishment or RRC connection re-establishment.

27. The network side device according to claim 26, wherein the RLF information further comprises: access time information, the access time information being used to indicate a length of time from a handover failure or a radio link failure to a RRC connection establishment or RRC connection re-establishment made by the terminal.

28. The network side device according to claim 26, wherein, when executing the program, the processor further implements the following step:
sending configuration information of the first timer to the terminal via air interface signalling.

29. The network side device according to claim 26, wherein the system identifier is used to indicate one of the following:
an access cell is an evolved packet core (EPC) system;
the access cell is a fifth-generation core (5GC) system;
the access cell is a universal terrestrial radio access (UTRA) system;
the access cell is a wireless fidelity (WIFI) system.

30. The network side device according to claim 26, wherein, when executing the program, the processor further implements the following steps:
receiving the RLF information from the terminal via air interface signalling;
wherein the RLF information is passed between network side devices or within the network side device.

31. The network side device according to claim 30, wherein, an interface used to pass the RLF information comprises at least one of the following:
Xn, X2, NG, S1, F1, or E1.

32. The network side device according to any one of claims 26 to 31, wherein the RLF information further comprises: a cell global identity (CGI) of the access cell.

33. A terminal, comprising:
a recording module, configured to record radio link failure (RLF) information, in a process of the terminal performing a radio resource control (RRC) connection re-establishment or a RRC connection establishment, the RLF information comprising at least one of: a tracking area code (TAC), a tracking area identifier (TAI) and a system identifier of a terminal access cell, wherein the RLF information is related to a time of RRC connection establishment or RRC connection re-establishment;
a reporting module, configured to report the RLF information to a network side device.

34. A network side device, comprising:
a receiving module, configured to receive radio link failure (RLF) information sent by a terminal;
wherein the RLF information comprises at least one of: a tracking area code (TAC), a tracking area identifier (TAI) and a system identifier of a terminal access cell, wherein the RLF information is related to a time of RRC connection establishment or RRC connection re-establishment.

35. A processor-readable storage medium storing thereon a program, when executed by the processor, the program implements the method of reporting radio link failure information according to any one of claims 1 to 9 or the method of obtaining radio link failure information according to any one of claims 10 to 16.
